# EUROPEAN PATENT SPECIFICATION

(11) **EP 4 349 926 B1**
(45) Date of publication and mention of the grant of the patent: **01.07.2026**
(21) Application number: 22815831.7
(22) Date of filing: 16.05.2022
(51) Int. Cl.: C09D 11/18, C09D 11/17, B43K 7/00, B43K 8/02

(54) **INK COMPOSITION FOR WRITING INSTRUMENT, AND WRITING INSTRUMENT ACCOMMODATING INK COMPOSITION FOR WRITING INSTRUMENT**
TINTENZUSAMMENSETZUNG FÜR SCHREIBINSTRUMENT UND SCHREIBINSTRUMENT MIT DER TINTENZUSAMMENSETZUNG FÜR SCHREIBINSTRUMENT
COMPOSITION D'ENCRE POUR INSTRUMENT D'ÉCRITURE, ET INSTRUMENT D'ÉCRITURE CONTENANT LA COMPOSITION D'ENCRE POUR INSTRUMENT D'ÉCRITURE

(30) Priority: 31.05.2021 JP 2021091602
(43) Date of publication of application: 10.04.2024
(73) Proprietor: Kabushiki Kaisha Pilot Corporation (also trading as Pilot Corporation), Tokyo 104-8304 (JP)
(72) Inventor: OZEKI, Yushi, Tokyo 104-8304 (JP)
(74) Representative: Hoffmann Eitle
(86) International application number: PCT/JP2022/020430
(87) International publication number: WO 2022/255079

(56) References cited:
- JP-A- 2013 028 691
- JP-A- 2015 000 950
- JP-A- 2017 159 469

## Description

### TECHNICAL FIELD

The present invention relates to a writing instrument ink composition and a writing instrument containing the writing instrument ink composition. More specifically, the present invention relates to a writing instrument ink composition that is excellent in pigment dispersion stability and capable of forming a clear handwriting with high concealing property, and a writing instrument containing the writing instrument ink composition.

### BACKGROUND ART

Conventionally, a writing instrument ink composition in which a white pigment such as titanium oxide is used to obtain a handwriting having concealing property is known. Further, a writing instrument ink composition capable of forming a pastel-like handwriting by blending a colorant of another color with such an ink composition having high concealing property is also preferably used.

However, since titanium oxide is a pigment having a large specific gravity, there is a problem that the pigment is likely to settle with the lapse of time, and it is difficult to redisperse the pigment when a hard cake is formed. Further, a writing instrument in which an ink composition containing titanium oxide is used is likely to decrease its handwriting density when the writing instrument is stored with its writing tip part facing upward and is likely to decrease its ink discharging properties when the writing instrument is stored with its writing tip part facing downward. For this reason, studies have been conducted to reduce settling of titanium oxide by increasing the viscosity of the ink using a thickener or the like. However, there are limitations on the writing instrument to which such a high-viscosity ink composition can be applied. In addition, in an ink composition in which titanium oxide and a colorant of another color are used in combination, color separation may occur in the ink because of a difference in specific gravity between the titanium oxide and the colorant. Thus, studies have been conducted to reduce settling of titanium oxide and to reduce formation of a hard cake (see, for example, Patent Literatures 1 to 4).

Patent Literature 1 discloses an aqueous pigment composition containing titanium oxide, an aluminum silicate-based pigment, and a specific resin.

Patent Literature 2 discloses an aqueous ink composition containing at least titanium oxide, succinoglycan, and water.

Patent Literature 3 discloses an aqueous ink for a ballpoint pen containing titanium oxide and oleic acid.

Patent Literature 4 discloses an aqueous pigment ink for a writing instrument containing titanium oxide, a chromatic pigment, a silica powder and/or an aluminosilicate, a water-soluble resin, a specific dispersant, a surfactant, and water.

In the compositions (ink composition) described above can slow the settling rate of titanium oxide by using a specific compound, but titanium oxide is likely to settle over time to form a hard cake or cause color separation in the ink, and it has been difficult to stably disperse titanium oxide in the ink compositions.

### CITATION LIST

### Patent Literature

Patent Document 1: JP S59-217776 A
Patent Document 2: JP H08-113752 A
Patent Document 3: JP H10-251588 A
Patent Document 4: JP H11-217532 A

### SUMMARY OF INVENTION

### PROBLEM TO BE SOLVED BY THE INVENTION

An object of the present invention is to provide a writing instrument ink composition in which a pigment has excellent dispersion stability and can redisperse easily, and that is capable of forming a clear handwriting with high concealability, and a writing instrument containing the writing instrument ink composition.

### MEANS FOR SOLVING PROBLEM

The present invention defines a writing instrument ink composition including at least a pigment containing a uric acid pigment, and a solvent.

Further, it is defined that the writing instrument ink composition further includes a dispersant, and the dispersant includes a polymer dispersant. Further, it is defined that the uric acid pigment has an average particle size of 0.05 µm or more and 1 µm or less, and a content of the uric acid pigment with respect to a total mass of the ink composition is 1 mass% or more and 50 mass% or less. Further, it is defined that the writing instrument ink composition further includes a colorant.

Furthermore, a writing instrument containing the writing instrument ink composition is defined.

### EFFECT OF THE INVENTION

The present invention is a writing instrument ink composition in which a pigment containing a uric acid pigment is used, the ink composition being excellent in dispersion stability of the pigment. In addition, because the pigment does not form a hard cake even when the pigment settles over time, the present invention can provide a writing instrument ink composition in which the pigment can redisperse easily, and that is capable of forming a clear handwriting with high concealment property, and a writing instrument containing the writing instrument ink composition.

### DESCRIPTION OF EMBODIMENTS

A writing instrument ink composition according to the present invention (hereinafter, it may be referred to as "ink composition" or "ink") contains at least a pigment containing a uric acid pigment, and a solvent. Hereinafter, each component constituting the ink composition according to the present invention will be described.

The ink composition according to the present invention contains a uric acid pigment. The uric acid pigment is a pigment composed of uric acid. Uric acid is produced as a result of metabolism in the human body. Thus, uric acid is a biologically derived organic substance, and the compound itself has high safety.

The uric acid pigment is present in the ink composition in a dispersed state and exhibits an effect of imparting a concealing property to the handwriting because the uric acid has a high refractive index and thus exhibits a white color. Titanium oxide, which is commonly used as a white pigment, is likely to settle in the ink composition because of its large specific gravity and further, is likely to form a hard cake, which makes redispersion of titanium oxide difficult. On the other hand, the uric acid pigment, having a small specific gravity as compared with titanium oxide, hardly settles in the ink composition and does not form a hard cake even when the uric acid pigment settles over time. Thus, the uric acid pigment can redisperse easily.

Thus, the ink composition according to the present invention, using a pigment containing a uric acid pigment, has excellent dispersion stability of the pigment and can easily redisperse the pigment without forming a hard cake even when the pigment settles over time. Therefore, the ink composition according to the present invention can form a clear handwriting with high concealing property at a uniform concentration. In addition, even when the ink composition according to the present invention contains a colorant, which is described later, separation of the uric acid pigment and the colorant in the ink composition is reduced. Therefore, the ink composition according to the present invention can form a colored handwriting with high concealing property at a uniform concentration.

The content of the uric acid pigment with respect to the total mass of the ink composition is not particularly limited but is preferably 1 mass% or more and 50 mass% or less, and more preferably 5 mass% or more and 30 mass% or less. When the content of the uric acid pigment exceeds 50 mass%, the ink discharge stability of the writing instrument containing the ink composition is likely to degrade, and writing defects such as faint parts and line skipping are likely to occur. When the content is less than 1 mass%, it is difficult to obtain a suitable handwriting density as a writing instrument, and the concealability of the handwriting is likely to be impaired.

The uric acid pigment is not particularly limited as long as it can be dispersed in the ink composition. The uric acid pigment may be produced, for example, by mechanically pulverizing crystalline uric acid into particles using various dispersing machines such as a jet mill, an attritor, and a bead mill. As the uric acid pigment, a uric acid pigment in which the uric acid pigment itself is colored may also be used.

The average particle size of the uric acid pigment is not particularly limited but is preferably in a range of 0.05 µm or more and 1 µm or less, and more preferably in a range of 0.1 µm or more and 0.5 µm or less. When the average particle size is within the above range, the dispersion stability of the uric acid pigment in the ink composition can improve.

The average particle size is a value of a volume-based average particle size measured using a dynamic light scattering particle size distribution analyzer [manufactured by MicrotracBEL Corporation, product name: NANOTRAC FLEX].

The ink composition according to the present invention may further contain a dispersant. For example, when the solvent to be applied to the present invention is water, the dispersant adsorbs to the surface of the uric acid pigment so that the dispersant can keep a distance between the uric acid pigments at a certain value or more to prevent aggregation while separating the uric acid pigments from each other, and thus, the dispersion stability of the uric acid pigment in the ink can improve. In addition, even when the uric acid pigments are aggregated to form aggregates, aggregates having a low density are formed, and thus, hard cake formation after settling of the uric acid pigment can be reduced.

Examples of the dispersant include a surfactant, a polymer dispersant, and an inorganic compound.

Examples of the surfactant include a nonionic surfactant, an anionic surfactant, a cationic surfactant, and an amphoteric surfactant.

Specific examples of the surfactant used as the dispersant include polyoxyalkylene alkylamines represented by the following General Formula (1) [in General Formula (1), the sum (m + n) of m and n is 29 or less].

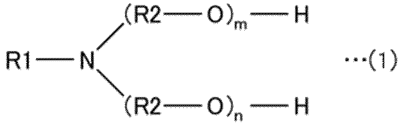

In General Formula (1), R1, R2, m, and n are as follows.

R1: an alkyl group or alkenyl group having 10 or more and 20 or less carbon atoms
R2: an alkylene group having 2 or 3 carbon atoms
m + n: number of 1 or more and 29 or less

Examples of R1 include a capryl group, a lauryl group, a myristyl group, a palmityl group, a stearyl group, an arachidyl group, a palmitoleyl group, an oleyl group, an elaidyl group, a coconut oil alkyl group, and a tallow alkyl group, and a lauryl group and a stearyl group are preferable. Examples of R2 include an ethylene group or a propylene group, and an ethylene group is preferable. m + n is preferably a number of 1 or more and 15 or less, and more preferably a number of 2 or more and 10 or less.

Examples of a commercially available product of the surfactant represented by General Formula (1) used in the present invention include, but are not limited to, BLAUNON L-205 [manufactured by AOKI OIL INDUSTRIAL Co., Ltd., m + n = 5 in General Formula (1)], BLAUNON S-202 [manufactured by AOKI OIL INDUSTRIAL Co., Ltd., m + n = 2 in General Formula (1)], BLAUNON S-207 [manufactured by AOKI OIL INDUSTRIAL Co., Ltd., m + n = 7 in General Formula (1)], BLAUNON S-210 [manufactured by AOKI OIL INDUSTRIAL Co., Ltd., m + n = 10 in General Formula (1)], BLAUNON S-215 [manufactured by AOKI OIL INDUSTRIAL Co., Ltd., m + n = 15 in General Formula (1)], and VISCOFINE E2C [manufactured by Kawaken Fine Chemicals Co., Ltd., m + n = 2 in General Formula (1)].

Examples of the surfactant used as the dispersant include a surfactant having -CO-NH- and -CO-N(CH₃)- as linking groups. Specific examples of such a surfactant include a surfactant represented by the following General Formula (2), the following General Formula (3), or the following General Formula (4).

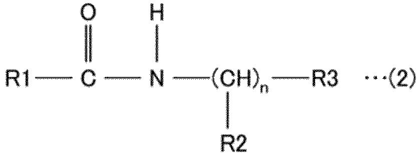

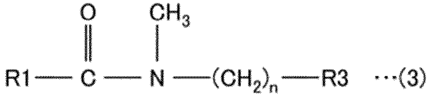

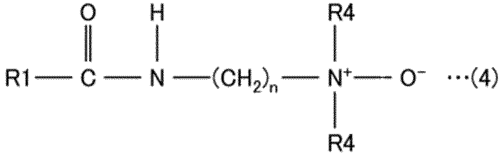

In General Formula (2), General Formula (3), and General Formula (4), R1, R2, R3, R4, and n are as follows.

R1: an alkyl group having 9 or more and 19 or less carbon atoms
R2: a hydrogen atom or a silk amino acid residue
R3: COOX (X is a hydrogen atom, a sodium atom, or a potassium atom)
R4: an alkyl group having 1 or more and 3 or less carbon atoms
n: an integer of 1 or more and 3 or less

Examples of R1 include a nonyl group, an undecyl group, a tridecyl group, a pentadecyl group, a heptadecyl group, a nonadecyl group, a coconut oil fatty acid residue, and a tallowate residue, and an undecyl group or a coconut oil fatty acid residue is preferable. Examples of R4 include a methyl group, an ethyl group, and an n-propyl group, and preferably, two R4 are both methyl groups.

When R2 is a silk amino acid residue, X is preferably a potassium atom.

When X is a hydrogen atom (H), R3 may be a salt neutralized with triethanolamine.

The commercially available product of the surfactant represented by General Formula (2), General Formula (3), or General Formula (4) used in the present invention is not limited. Examples of the surfactant used as the dispersant include KAWASILK S [manufactured by Kawaken Fine Chemicals Co., Ltd.], SOIPON SLTA [manufactured by Kawaken Fine Chemicals Co., Ltd.], SOIPON M-30 [manufactured by Kawaken Fine Chemicals Co., Ltd.], ALANON ALTA [manufactured by Kawaken Fine Chemicals Co., Ltd.], SOFTAZOLINE LAO [manufactured by Kawaken Fine Chemicals Co., Ltd.], Sarcosinate PN [manufactured by Kawaken Fine Chemicals Co., Ltd.], and Sarcosinate CN-30 [manufactured by Nikko Chemicals Co., Ltd.].

Examples of the surfactant used as the dispersant also include polyoxyethylene acetylene glycol, phytosterol, and amine salts of anionic activators. Examples of commercially available products of these surfactants include ACETYLENOL E40 [manufactured by Kawaken Fine Chemicals Co., Ltd.], ACETYLENOL E60 [manufactured by Kawaken Fine Chemicals Co., Ltd.], ACETYLENOL E100 [manufactured by Kawaken Fine Chemicals Co., Ltd.], NIKKOL BPS-10 [manufactured by Nikko Chemicals Co., Ltd.], NIKKOL BPS-20 [manufactured by Nikko Chemicals Co., Ltd.], and DISPARLON AQ-360 [manufactured by Kusumoto Chemicals, Ltd.].

Examples of the polymer dispersant used as the dispersant include synthetic resins such as polyvinyl pyrrolidone, polyvinyl butyral, polyvinyl ether, a styrene-maleic acid copolymer, a ketone resin, hydroxyethyl cellulose and derivatives thereof, and a styrene-acrylic acid copolymer, an acrylic polymer, a PO/EO adduct, and an amine-based oligomer of polyester.

Specifically, examples of the polymer dispersant used as the dispersant include a polymer dispersant in which at least one of an acid value and an amine value exceeds 0 mg KOH/g. Of these, it is preferable to use a polymer dispersant having an amine value exceeding 0 mg KOH/g or a polymer dispersant having both an acid value and an amine value exceeding 0 mg KOH/g.

The amine value represents the mass (mg) of potassium hydroxide equivalent to the amount of hydrochloric acid required to neutralize 1 g of the solid content. The amine value may be measured by the method described in JIS K 7237:1995.

The acid value represents the mass (mg) of potassium hydroxide required to neutralize 1 g of the solid content. The acid value may be measured by the method described in JIS K 0070:1992.

As the polymer dispersant having an acid value exceeding 0 mg KOH/g, a polymer dispersant having an acid value of less than 10 mg KOH/g is preferably used, and a polymer dispersant having an acid value of 5 mg KOH/g or less is preferably used. Examples of commercially available products of the polymer dispersant satisfying these conditions include DISPERBYK-199 (manufactured by BYK Japan KK.) and BYK-2060 (manufactured by BYK Japan KK.).

As the polymer dispersant having an amine value exceeding 0 mg KOH/g, a polymer dispersant having an amine value of 5 mg KOH/g or more and 50 mg KOH/g or less is preferably used, and a polymer dispersant having an amine value of 15 mg KOH/g or more and 40 mg KOH/g or less is more preferably used. Examples of commercially available products of the polymer dispersant satisfying these conditions include DISPERBYK-184 (manufactured by BYK Japan KK.), DISPERBYK-2055 (manufactured by BYK Japan KK.), Hinoact NB (manufactured by Kawaken Fine Chemicals Co., Ltd.), and Solsperse 20000 (manufactured by Lubrizol Japan Ltd.).

As the polymer dispersant having an acid value and an amine value exceeding 0 mg KOH/g, a polymer dispersant having an acid value of 5 mg KOH/g or more and 50 mg KOH/g or less and an amine value of 10 mg KOH/g or more and 45 mg KOH/g or less is preferably used. Further, it is more preferable to use a polymer dispersant having an acid value of 5 mg KOH/g or more and 50 mg KOH/g or less, an amine value of 10 mg KOH/g or more and 45 mg KOH/g or less, and a large acid value with respect to the amine value, that is, a value of acid value/amine value exceeding 1. Examples of commercially available products of such a polymer dispersant include DISPERBYK-191 (manufactured by BYK Japan KK.), DISPERBYK-2010 (manufactured by BYK Japan KK.), DISPERBYK-2013 (manufactured by BYK Japan KK.), ANTI TERRA-250 (manufactured by BYK Japan KK.), DISPARLON AQ-380 (manufactured by Kusumoto Chemicals, Ltd.), and FLOWLEN G-700AMP (manufactured by Kyoeisha Chemical Co., Ltd.).

Examples of the polymer dispersant include fluorine group-containing oligomers. Examples of commercially available products of such a polymer dispersant include MEGAFACE F-477 (manufactured by DIC CORPORATION), MEGAFACE F-553 (manufactured by DIC CORPORATION), and MEGAFACE F-554 (manufactured by DIC CORPORATION) .

Examples of the inorganic compound used as the dispersant include pyrophosphate and hexametaphosphate.

When the ink composition according to the present invention contains a dispersant, the content of the dispersant with respect to the uric acid pigment is not particularly limited but is preferably in a range of 0.1 mass% or more and 100 mass% or less, and more preferably in a range of 1 mass% or more and 50 mass% or less. When the content of the dispersant is within the above range, the dispersion stability of the uric acid pigment in the ink composition can be more stably maintained.

The ink composition according to the present invention contains a solvent. Examples of the solvent include water and an organic solvent.

The water is not particularly limited, and examples thereof include tap water, ion-exchanged water, ultrafiltered water, and distilled water.

The organic solvent is not particularly limited, and examples thereof include glycol ether-based solvents, glycol-based solvents, alcohol-based solvents, ketone-based solvents, ester-based solvents, and hydrocarbon-based solvents.

Examples of the glycol ether-based solvent include ethylene glycol monomethyl ether, ethylene glycol monoethyl ether, ethylene glycol monobutyl ether, ethylene glycol dimethyl ether, ethylene glycol monophenyl ether, propylene glycol monomethyl ether, propylene glycol monoethyl ether, diethylene glycol dimethyl ether, 3-methoxybutanol, and 3-methoxy-3-methylbutanol.

Examples of the glycol-based solvent include diethylene glycol, triethylene glycol, polyethylene glycol, propylene glycol, dipropylene glycol, butylene glycol, and ethylene glycol.

Examples of the alcohol-based solvent include benzyl alcohol, methanol, ethanol, 1-propanol, 2-propanol, 1-butanol, isobutanol, 2-butanol, tert-butanol, propargyl alcohol, allyl alcohol, 3-methyl-1-butyne-3-ol, ethylene glycol monomethyl ether acetate, and other higher alcohols.

Examples of the ketone-based solvent include acetone, dimethyl ketone, diethyl ketone, methyl ethyl ketone, and methyl isobutyl ketone.

Examples of the ester-based solvent include n-butyl formate, isobutyl formate, ethyl acetate, n-propyl acetate, isopropyl acetate, n-butyl acetate, isobutyl acetate, ethyl propionate, n-butyl propionate, methyl butyrate, ethyl butyrate, methyl lactate, and ethyl lactate.

Examples of the hydrocarbon solvent include n-hexane, n-heptane, n-octane, isooctane, cyclohexane, methylcyclohexane, ethylcyclohexane, toluene, xylene, and ethylbenzene.

The solvent may be used singly or in combination of two or more thereof.

The content of the solvent with respect to the total mass of the ink composition is not particularly limited but is preferably 10 mass% or more and 90 mass% or less, and more preferably 30 mass% or more and 80 mass% or less.

The ink composition according to the present invention may further contain a colorant. By using a uric acid pigment and a colorant in combination, it is possible to obtain an ink composition exhibiting a color (pastel-like color) having concealing property.

The colorant is not particularly limited as long as it is a dye or pigment that can be dissolved or dispersed in a solvent.

Examples of the dye include an acidic dye, a basic dye, a direct dye, an oil-soluble dye, and a disperse dye.

Specific examples of the acid dye include neucoxin (C.I. 16255), tartrazine (C.I. 19140), Acid Blue Black 10B (C.I. 20470), Guinea Green (C.I. 42085), Brilliant Blue FCF (C.I. 42090), Acid Violet 6B (C.I. 42640), Soluble Blue (C.I. 42755), Naphthalene Green (C.I. 44025), eosin (C.I. 45380), furoxin (C.I. 45410), erythrosine (C.I. 45430), Nigrosine (C.I. 50420), and Acid Flavin (C.I. 56205).

Specific examples of the basic dye include Chrysoidin (C.I. 11270), Methyl violet FN (C.I. 42535), Crystal violet (C.I. 42555), malachite green (C.I. 42000), Victoria Blue FB (C.I. 44045), Rhodamine B (C.I. 45170), Acridine Orange NS (C.I. 46005), and methylene blue B (C.I. 52015).

Specific examples of the direct dye include congo red (C.I. 22120), Direct Sky Blue 5B (C.I. 24400), Violet BB (C.I. 27905), Direct Deep Black EX (C.I. 30235), Kayarus Black G conc (C.I. 35225), Direct First Black G (C.I. 35255), and Phthalocyanine Blue (C.I. 74180).

Examples of the oil-soluble dye include C.I. Solvent Black 7, C.I. Solvent Black 123, C.I. Solvent Blue 2, C.I. Solvent Blue 25, C.I. Solvent Blue 55, C.I. Solvent Blue 70, C.I. Solvent Red 8, C.I. Solvent Red 49, C.I. Solvent Red 100, C.I. Solvent Violet 8, C.I. Solvent Violet 21, C.I. Solvent Green 3, C.I. Solvent Yellow 21, C.I. Solvent Yellow 44, C.I. Solvent Yellow 61, and C.I. Solvent Orange 37.

Examples of the disperse dye include C.I. Disperse Yellow 82, C.I. Disperse Yellow 3, C.I. Disperse Yellow 54, C.I. Disperse Red 191, C.I. Disperse Red 60, and C.I. Disperse Violet 57.

Examples of the pigment include inorganic pigments, organic pigments, glitter pigments, fluorescent pigments, and light-storing pigments.

Examples of the inorganic pigment include carbon black, iron black, yellow iron oxide, red oxide, and ultramarine blue.

Examples of the organic pigment include azo-based pigments, phthalocyanine-based pigments, quinacridone-based pigments, perylene-based pigments, perinone-based pigments, isoindolinone-based pigments, isoindoline-based pigments, dioxazine-based pigments, thioindigo-based pigments, anthraquinone-based pigments, quinophthalone-based pigments, diketopyrrolopyrrole-based pigments, threne-based pigments, indigo-based pigments, phthalone-based pigments, methine-azomethine-based pigments, and metal-complex-based pigments.

It is also possible to use a water-dispersed pigment or the like in which a pigment is finely and stably dispersed in an aqueous medium in advance using a surfactant or a resin.

Specific examples of the water-dispersed pigment may include C.I. Pigment Blue 15:3B [manufactured by SANYO COLOR WORKS, Ltd., product name: Sandye Super Blue GLL-E (solid content: 24%)], C.I. Pigment Red 146 [manufactured by SANYO COLOR WORKS, Ltd., product name: Sandye Super Pink FBL (solid content: 21.5%)], C.I. Pigment Yellow 81 [manufactured by Dainichiseika Color & Chemicals Mfg. Co., Ltd., product name: TC Yellow FG (solid content: about 30%)], and C.I. Pigment Red 220/166 [manufactured by Dainichiseika Color & Chemicals Mfg. Co., Ltd., product name: TC Red FG (solid content: about 35%)].

Examples of the resin that disperses the pigment include polyamide, urethane resin, polyester, epoxy resin, melamine resin, phenol resin, silicone resin, polyvinyl alcohol, polyvinyl pyrrolidone, polyvinyl acetate, polyvinyl chloride, polyvinylidene chloride, polystyrene, acrylic acid resin, maleic acid resin, gum arabic, cellulose, dextran, casein, derivatives thereof, and copolymers of the above resins.

Examples of the glitter pigment include a metallic luster pigment in which the surface of a core substance such as a glass piece is coated with gold, silver, or the like, a pearl pigment in which the surface of a core substance such as natural mica, synthetic mica, or flaky aluminum oxide is coated with a metal oxide such as titanium oxide, a cholesteric liquid crystal type pigment, a metal powder pigment, a metal pigment obtained by peeling a metal deposited film such as aluminum formed on a base material such as a film, and a metal pigment obtained by forming a metal deposited film such as aluminum on a colorless transparent or colored transparent film and performing powder treatment.

Specific examples of the metallic luster pigment in which the surface of a core substance such as a glass piece is coated with gold, silver or the like include METASHINE 5480PS, METASHINE 5230PS, METASHINE 5150PS, METASHINE 5090PS, METASHINE 2080PS, METASHINE 1030PS, METASHINE 2025PS, METASHINE 1030GP, and METASHINE 2080GP manufactured by Nippon Sheet Glass Company, Ltd.

Specific examples of the pearl pigment in which the surface of natural mica is coated with titanium oxide include Iriodin 100, Iriodin 111, Iriodin 120, Iriodin 153, Iriodin 201, Iriodin 211, Iriodin 223, Iriodin 231, Iriodin 302, Iriodin 323, Iriodin 520, Iriodin 522, and Iriodin 524 manufactured by Merck Corporation.

Specific examples of the pearl pigment in which the surface of synthetic mica is coated with titanium oxide include product names TWINCLEPEARL SXB, TWINCLEPEARL YXB, TWINCLEPEARL RXB, TWINCLEPEARL BXB, TWINCLEPEARL SXD, TWINCLEPEARL YXD, TWINCLEPEARL RXD, TWINCLEPEARL BXD, TWINCLEPEARL SX, TWINCLEPEARL YX, TWINCLEPEARL RX, and TWINCLEPEARL BX manufactured by Nippon Koken Kogyo Co., Ltd., product names ULTIMICA SB-100, ULTIMICA SD-100, ULTIMICA SE-100, ULTIMICA SF-100, ULTIMICA SH-100, ULTIMICA YB-100, ULTIMICA YE-100, and ULTIMICA YF-100 manufactured by Nippon Koken Kogyo Co., Ltd.

Specific examples of the pearl pigment in which the surface of flaky aluminum oxide is coated with titanium oxide include Xirallic T60-10 WNT Crystal Silver, Xirallic T60-20 WNT Sunbeam Gold, Xirallic T60-21 WNT Solaris Red, Xirallic T60-23 WNT Galaxy Blue, Xirallic T60-24 WNT Stellar Green, and Xirallic T60-25 WNT Cosmic Turquoise manufactured by Merck Corporation.

Specific examples of the cholesteric liquid crystal type pigment include product names: HELICONE HC Sapphire, HELICONE HC Scarabeus, HELICONE HC Jade, and HELICONE HC Maple manufactured by Wacker Chemie AG.

Examples of the metal powder pigment include metal powder pigments having metallic luster such as aluminum powder, brass powder, stainless steel powder, and bronze powder, and metal powder pigments in which colorants such as dyes and pigments are adsorbed to these metal powder pigments. It is also possible to use a pigment dispersion obtained by processing and dispersing the metal powder pigment in advance with a surfactant, a resin, a solvent, or the like to form a paste or a liquid metal powder pigment dispersion.

Examples of the fluorescent pigment include synthetic resin fine particulate fluorescent pigments in which various fluorescent dyes are solid-solved in a resin matrix.

As the light-storing pigment, general-purpose light-storing pigments are used as long as they have characteristics of absorbing and accumulating light rays of the sun, electric lamps, and the like, and gradually releasing and emitting light in a dark place (this is referred to as afterglow). Examples thereof include light-storing pigments such as CaS/Bi-based, CaSrS/Bi-based, ZnS/Cu-based, ZnCdS/Cu-based, and SrAl2O4/rare earth metal-based light-storing pigments.

The colorant may be used singly or in combination of two or more thereof.

When the ink composition according to the present invention contains a colorant, the content of the colorant with respect to the total mass of the ink composition is not particularly limited but is preferably 0.01 mass% or more and 50 mass% or less, and more preferably 0.1 mass% or more and 30 mass% or less. When the content of the colorant exceeds 50 mass%, the ink discharge stability of the writing instrument containing the ink composition is likely to degrade, and writing defects such as faint parts and line skipping are likely to occur. When the content is less than 0.01 mass%, it is difficult to obtain a suitable handwriting density as a writing instrument.

When the above-described pigment is used as the colorant, a pigment dispersant may be used as necessary. Examples of the pigment dispersant include anionic and nonionic surfactants, anionic polymers such as polyacrylic acid and styrene-acrylic acid, and nonionic polymers such as PVP and PVA.

The dye or pigment described above is effective even when used as it is, but a microcapsule pigment containing the dye or pigment in microcapsules, or resin particles containing the dye or pigment may also be used as the colorant applied to the present invention. In particular, the dye or pigment is isolated and protected from the external environment by being encapsulated in a microcapsule, and the water resistance and light resistance of the inclusion can be improved.

Examples of the microcapsule pigment containing a dye or a pigment include a microcapsule pigment containing a colored body obtained by dispersing or dissolving a dye or a pigment in an oily medium.

As the pigment, the inorganic pigments, organic pigments, glitter pigments, fluorescent pigments, light-storing pigments, described above and the like may be used, and as the dye, the oil-soluble dye and disperse dyes described above and the like may be used.

Examples of the oily medium include esters such as monobasic acid esters, dibasic acid monoesters, dibasic acid diesters, and partial or complete esters of polyhydric alcohols, aromatic hydrocarbons such as alkylbenzenes and alkylnaphthalenes, higher alcohols, ketones, and ethers.

The oily medium may be used singly or in combination of two or more thereof.

The microencapsulation of the microcapsule pigment includes conventionally known isocyanate-based interfacial polymerization methods, in-situ polymerization methods such as melamine-formalin polymerization methods, in-liquid curing coating methods, phase separation methods from aqueous solutions, phase separation methods from organic solvents, melt dispersion cooling methods, in-air suspension coating methods, and spray drying methods, and the method is appropriately selected according to the application. Examples of the material of the capsule include an epoxy resin, a urea resin, a urethane resin, and an isocyanate resin.

Further, a secondary resin film may be further provided on the surface of the microcapsule according to the purpose to impart durability, or the surface properties may be modified and put to practical use.

Examples of the resin particles containing a dye include resin particles in which a dye is uniformly dissolved or dispersed in resin particles, and resin particles in which a dye is dyed on resin particles.

The dye is not particularly limited as long as it can be dissolved, dispersed, or dyed in the resin constituting the resin particles, and the acidic dyes, basic dyes, direct dyes, oil-soluble dyes and disperse dyes described above and the like may be used.

When the resin particles contain a dye, examples of the resin constituting the resin particles may include polystyrene, an acrylic resin, an epoxy resin, a melamine resin, polyester, polyvinyl chloride, polybutadiene, a benzoguanamine resin, polyamide, a urethane resin, polymethyl methacrylate, an acrylic-urethane copolymer resin, a phenol resin, polyethylene, polypropylene, polyacrylonitrile, polyacetal, an ethylene-propylene copolymer resin, an ethylene-vinyl acetate copolymer resin, a styrene-acrylic copolymer resin, a styrene-butadiene copolymer resin, a styrene-acrylonitrile copolymer resin, and an acrylonitrile-butadiene copolymer resin, and of these, thermosetting resins are preferable.

Thermosetting resins are preferable because they are excellent in solvent resistance and heat resistance as compared with thermoplastic resins, and they are also excellent in migration resistance of the contained dye, and thus, elution of the dye from the resin can be reduced.

Examples of the thermosetting resin include an epoxy resin, an epoxy acrylate resin, a xylene resin, a toluene resin, a guanamine resin, a benzoguanamine resin, a melamine resin, a urethane resin, a phenol resin, an alkyd resin, a polyamide, a polyimide, a polyamide ester, a urea resin, a silicone resin, and an unsaturated polyester. Of these, a guanamine resin or a melamine resin is preferable because elution of a dye can be further reduced.

Examples of the resin particles containing a pigment include resin particles in which a pigment is homogeneously dispersed in resin particles and resin particles in which surfaces of resin particles are coated with a pigment.

The pigment is not particularly limited as long as it can be dispersed or adsorbed to the resin constituting the resin particles, and the inorganic pigments, organic pigments, glitter pigments, fluorescent pigment, and light-storing pigments described above and the like may be used. The pigment may be surface-treated by various conventionally known methods for the purpose of improving dispersibility or adsorbability in the resin constituting the resin particles.

As the resin constituting the resin particles, the same resin as the resin constituting the resin particles containing a dye described above may be used.

The resin particles may be produced by a pulverization method, a spray drying method, or a polymerization method in which the resin particles are polymerized in the presence of a dye or a pigment in an aqueous or oily medium. Examples of the polymerization method include a suspension polymerization method, a suspension polycondensation method, a dispersion polymerization method, and an emulsion polymerization method.

The shape of the resin particles is not particularly limited, and resin particles having a spherical shape such as a perfect spherical shape, an elliptical spherical shape, or a substantially spherical shape, a polygonal shape, or a flat shape may be used, but it is preferable to use spherical resin particles.

When a microcapsule pigment or resin particles containing a dye or a pigment are contained as the colorant, the content of the colorant with respect to the total mass of the ink composition is not particularly limited, but is preferably in a range of 0.01 mass% or more and 50 mass% or less, and more preferably in a range of 0.1 mass% or more and 30 mass% or less. When the content of the colorant exceeds 50 mass%, the ink discharging properties of the writing instrument containing the ink composition is likely to degrade, and writing defects such as faint parts and line skipping are likely to occur. When the content is less than 0.01 mass%, it is difficult to obtain a suitable handwriting density as a writing instrument.

As the colorant, a functional material such as a thermochromic material or a photochromic material may also be used.

Examples of the thermochromic material include (a) an electron-donating color-developing organic compound, (b) an electron-accepting compound, and (c) a reversibly thermochromic composition containing a reaction medium that determines the occurrence temperature of the color-developing reaction of the components (a) and (b).

As the reversibly thermochromic composition, a reversibly thermochromic composition of a heat-decoloring type having a characteristic of a relatively small hysteresis width (ΔH) (ΔH = 1 to 7°C) described in JP S51-44706 B, JP S51-44707 B, JP H01-29398 B, and the like may be used. The heat-decoloring type means that the color disappears when heated and the color is developed when cooled. The reversibly thermochromic composition changes its color before and after a color-changing point that is a predetermined temperature as a boundary and exhibits a decolored state in a temperature range of equal to or more than a high-temperature-side color-changing point or more and a color-developing state in a temperature range of equal to or less than a low-temperature-side color-changing point. In addition, this reversibly thermochromic composition is present in only one specific state of the states in the normal temperature range. Then, the other state of the reversibly thermochromic composition is maintained while heat or cold required for the expression of the other state is applied, but when the application of heat or cold is eliminated, the composition returns to the state that is exhibited in the normal temperature range.

Further, it is possible to use a reversibly thermochromic composition of a heat-decoloring type having a characteristic of a relatively large hysteresis width (ΔH = 8 to 50°C) described in JP H04-17154 B, JP H07-179777 A, JP H07-33997 A, JP H08-39936 A, and the like. It is possible to use a reversibly thermochromic composition of a heat-decoloring type which exhibits a large hysteresis characteristic and is described in JP 2006-137886 A, JP 2006-188660 A, JP 2008-45062 A, JP 2008-280523 A, and the like. These reversibly thermochromic compositions change the color following a greatly different path between when the temperature is raised from the lower temperature side than the discoloration temperature range and conversely when the temperature is lowered from the higher temperature side than the discoloration temperature range in the shape of a curve obtained by plotting a change in color development concentration due to a change in temperature. In these reversibly thermochromic compositions, the color-developing state in a temperature range of a complete color development temperature t₁ or less or the decolored state in a high temperature range of a complete decoloring temperature t₄ or more has color memory properties in a specific temperature range. The specific temperature range represents a temperature range between a color-development start temperature t₂ and a decoloring start temperature t₃, that is, a substantially two-phase holding temperature range.

When a reversibly thermochromic composition having the above-described color-memory property is applied to the present invention, as the reversibly thermochromic composition, specifically, the complete color development temperature t₁ is specified to a temperature that can be obtained only in a freezing room, a cold district, or the like, and the complete decoloring temperature t₄ is specified to a range of a temperature that can be obtained from a familiar heating body such as a frictional heat by a friction body, a hair dryer, or the like. By specifying the ΔH value to be 40°C or more and 100°C or less, the reversibly thermochromic composition can effectively function for keeping a color exhibited in a normal state (daily life temperature range).

The temperature that can be obtained only in a freezing room, a cold district, or the like is -50°C or more and 0°C or less, preferably -40°C or more and -5°C or less, and more preferably -30°C or more and -10°C or less. The temperature obtained from a familiar heating body such as a hair dryer is 50°C or more and 95°C or less, preferably 50°C or more and 90°C or less, and more preferably 60°C or more and 80°C or less.

As the reversibly thermochromic composition, a reversibly thermochromic composition of a heat-color-developing type using a gallic acid ester described in JP S51-44706 B, JP 2003-253149 A, or the like may also be used. The heat-color-developing type means that the color develops when heated and the color disappears when cooled.

The reversibly thermochromic composition is a phase solution containing the above-described components (a), (b), and (c) as essential components, and the ratio of each component depends on the concentration, color-changing temperature, color-changing form, and type of each component. In general, the component ratio at which desired characteristics are obtained is in the range of 0.1 or more and 100 or less, preferably 0.1 or more and 50 or less, more preferably 0.5 or more and 20 or less for the component (b), and 1 or more and 800 or less, preferably 5 or more and 200 or less, more preferably 10 or more and 100 or less for the component (c), with respect to 1 of the component (a). All of these proportions are parts by mass.

Examples of the photochromic material include photochromic compounds such as conventionally known spirooxazine derivatives, spiropyran derivatives, and naphthopyran derivatives which develop color when irradiated with sunlight, ultraviolet light, or blue light having a peak emission wavelength in the range of 400 to 495 nm and decolor when the irradiation is stopped.

Examples of the spirooxazine derivative include conventionally known indolino spirobenzoxazine-based compounds, indolino spironaphthoxazine-based compounds, indolino spirophenanthrooxazine-based compounds, and indolino spiroquinolinooxazine-based compounds.

Further, examples of the photochromic compound having a photo-memory property (color-memory photochromic property) include conventionally known fulgide derivatives and diarylethene derivatives.

As the photochromic material, a reversibly photochromic composition obtained by dissolving the photochromic compound in various oligomers may also be used.

Examples of the oligomer include a styrene-based oligomer, an acryl-based oligomer, a terpene-based oligomer, and a terpene phenol-based oligomer.

Examples of the styrene-based oligomer include low molecular weight polystyrene, a styrene-α-methylstyrene copolymer, an α-methylstyrene polymer, and a copolymer of α-methylstyrene and vinyltoluene.

Examples of the acrylic oligomer include an acrylic acid ester copolymer.

Examples of the terpene-based oligomer include an α-pinene polymer, a β-pinene polymer, and a d-limonene polymer.

Examples of the terpene phenolic oligomer include an α-pinene-phenol copolymer.

By dissolving the photochromic compound in various oligomers, the light resistance of the photochromic compound can be improved, the color-development density can be improved, and the color-changing sensitivity can be adjusted.

The oligomers may be used singly or in combination of two or more thereof.

The reversibly thermochromic composition or the reversibly photochromic composition described above is effective even when used as it is, but they may also be used as a colorant to be applied to the present invention by encapsulating the composition in microcapsules to form a reversibly thermochromic microcapsule pigment or a reversibly photochromic microcapsule pigment, or dispersing the composition in a thermoplastic resin or a thermosetting resin to form reversibly thermochromic resin particles or reversibly photochromic resin particles.

Hereinafter, the reversibly thermochromic microcapsule pigment and the reversibly photochromic microcapsule pigment may be referred to as "microcapsule pigment", and the reversibly thermochromic resin particles and the reversibly photochromic resin particles may be referred to as "resin particles".

The reversibly thermochromic composition or the reversibly photochromic composition is preferably encapsulated in microcapsules to form a reversibly thermochromic microcapsule pigment or a reversibly photochromic microcapsule pigment. This is because a chemically and physically stable pigment can be formed by being encapsulated in microcapsules, and further, the reversibly thermochromic composition or the reversibly photochromic composition can be maintained at the same composition under various use conditions, and the same action and effect can be exhibited.

The microencapsulation includes conventionally known isocyanate-based interfacial polymerization methods, in-situ polymerization methods such as melamine-formalin polymerization methods, in-liquid curing coating methods, phase separation methods from aqueous solutions, phase separation methods from organic solvents, melt dispersion cooling methods, in-air suspension coating methods, and spray drying methods, and the method is appropriately selected according to the application. Examples of the material of the capsule include an epoxy resin, a urea resin, a urethane resin, and an isocyanate resin.

Further, a secondary resin film may be further provided on the surface of the microcapsule according to the purpose to impart durability, or the surface properties may be modified and put to practical use.

In the microcapsule pigment, the mass ratio of the inclusion : the wall film is preferably 7 : 1 to 1 : 1, and when the mass ratio of the inclusion and the wall film is within the above range, it is possible to prevent a decrease in color density and sharpness at the time of color development. More preferably, the mass ratio of inclusion : wall film is 6 : 1 to 1 : 1.

Blending a non-color-changing colorant such as a general dye or pigment in the microcapsule pigment allows the microcapsule pigment to exhibit a color-changing behavior from a color (1) to a color (2).

Examples of the reversibly thermochromic resin particles or reversibly photochromic resin particles include resin particles in which the above-described reversibly thermochromic composition or reversibly photochromic composition is homogeneously dispersed in resin particles.

The resin constituting the resin particles is not particularly limited as long as it is a thermoplastic resin or a thermosetting resin.

Examples of the thermoplastic resin include polystyrene, an acrylic resin, polyester, polyvinyl chloride, polybutadiene, polymethyl methacrylate, an acrylurethane copolymer resin, polyethylene, polypropylene, polyacrylonitrile, polyacetal, an ethylene-propylene copolymer resin, an ethylene-vinyl acetate copolymer resin, a styrene-acrylic copolymer resin, a styrene-butadiene copolymer resin, a styrene-acrylonitrile copolymer resin, and an acrylonitrile-butadiene copolymer resin.

Examples of the thermosetting resin include an epoxy resin, an epoxy acrylate resin, a xylene resin, a toluene resin, a guanamine resin, a benzoguanamine resin, a melamine resin, a urethane resin, a phenol resin, an alkyd resin, a polyamide, a polyimide, a polyamide ester, a urea resin, a silicone resin, and an unsaturated polyester.

The resin particles may be produced by a pulverization method, a spray drying method, or a polymerization method in which the resin particles are polymerized in the presence of the reversibly thermochromic resin composition or reversibly photochromic resin composition in an aqueous or oily medium. Examples of the polymerization method include a suspension polymerization method, a suspension polycondensation method, a dispersion polymerization method, and an emulsion polymerization method.

The shape of the resin particles is not particularly limited, and resin particles having a spherical shape such as a perfect spherical shape, an elliptical spherical shape, or a substantially spherical shape, a polygonal shape, or a flat shape may be used, but it is preferable to use spherical resin particles.

Blending a non-color-changing colorant such as a general dye or pigment in the resin particles allows the microcapsule pigment to exhibit a color-changing behavior from a color (1) to a color (2).

When the reversibly thermochromic composition, the reversibly photochromic composition, the microcapsule pigment encapsulating these compositions, and the resin particles containing these compositions are contained as the colorant, the content of the colorant with respect to the total mass of the ink composition is not particularly limited, but is preferably 5 mass% or more and 40 mass% or less, more preferably 10 mass% or more and 40 mass% or less, and still more preferably 15 mass% or more and 35 mass% or less. When the content of the colorant exceeds 40 mass%, the ink discharging properties of the writing instrument containing the ink composition degrades, and writing defects such as faint parts and line skipping are likely to occur. When the content is less than 5 mass%, it is difficult to obtain suitable color-changing property and handwriting density as a writing instrument, and it is difficult to sufficiently satisfy the color-changing function.

The average particle diameter of the reversibly thermochromic microcapsule pigment or resin particles or the reversibly photochromic microcapsule pigment or resin particles is preferably in the range of 0.01 µm or more and 5 µm or less, more preferably 0.1 µm or more and 3 µm or less, and still more preferably 0.5 µm or more and 3 µm or less. When the average particle diameter of the microcapsule pigment or resin particles is more than 5 µm, it is difficult to obtain good ink discharging properties when the microcapsule pigment or resin particles are used for a writing instrument. When the average particle diameter is less than 0.01 µm, it is difficult to exhibit high-concentration color-development property.

In the measurement of the average particle size, the region of the particles is determined using image analysis type particle size distribution measurement software [manufactured by MOUNTECH Co., Ltd., product name: Mac-View], the projected area circle-equivalent diameter (Heywood diameter) is calculated from the area of the region of the particles, and the average particle size is measured as an average particle size of particles equivalent to an equal volume sphere based on the calculated value.

When the particle size of all or most of the particles exceeds 0.2 µm, the average particle size of particles equivalent to an equal volume sphere may also be measured by a Coulter method using a particle size distribution measuring apparatus [manufactured by Beckman Coulter K.K., product name: Multisizer 4e].

Further, the volume-based particle size and the average particle size may be measured using a calibrated laser diffraction/scattering particle size distribution measuring apparatus [manufactured by HORIBA, Ltd., product name: LA-300] based on the numerical value measured using the software or the measuring apparatus for the Coulter method described above.

In the ink composition according to the present invention, in addition to the essential components described above, optional components may be blended as long as the effects of the present invention are not impaired.

A thickener may be blended in the ink composition according to the present invention, with which aggregation and settling of the pigment can be reduced, and an ink composition having good temporal stability can be obtained.

As the thickener, a conventionally known substance may be used, but it is preferable to use a substance capable of imparting shear thinning to the ink composition (shear thinning agent).

The ink composition using the shear thinning agent is difficult to flow with high viscosity in a standing state or when the stress is low, and the viscosity is easily lowered when stress is applied from the outside. Thus, it is possible to prevent leakage of the ink and to prevent separation and backflow of the ink at the time of non-writing, and it is easy to improve ink discharge stability from the pen tip at the time of writing.

In particular, when such an ink composition is used in a writing instrument (ballpoint pen) equipped with a ballpoint pen tip as a pen tip, the ink composition has a high viscosity at the time of standing without application of shear stress, and thus, the ink composition is stably kept in the ballpoint pen. Thus, at the time of writing, a strong shear stress is applied to the ink composition with rotation of the ball, and the viscosity of the ink composition in the vicinity of the ball is easily reduced, and thus, the ink discharge stability can be improved.

When the ink composition according to the present invention contains a thickener, the content of the thickener with respect to the total mass of the ink composition is not particularly limited, but is preferably in the range of 0.1 mass% or more and 20 mass% or less.

Examples of the shear thinning agent include water-soluble polysaccharides, polymers containing an alkyl ester of methacrylic acid as a main component and having a molecular weight of 100,000 or more and 150,000 or less, poly-N-vinyl carboxylic acid amide crosslinked products, benzylidene sorbitol and derivatives thereof, benzylidene xylitol and derivatives thereof, alkali thickened acrylic resins, crosslinkable acrylic acid polymers, inorganic fine particles, nonionic surfactants having an HLB value of 8 or more and 12 or less, and metal salts and amine salts of dialkyl sulfosuccinic acid.

The shear thinning agent may be used singly or in combination of two or more thereof.

Examples of the water-soluble polysaccharide include xanthan gum, welan gum, zetasea gum, diutan gum, macrohomopsis gum, succinoglycan (having an average molecular weight of about 1,000,000 or more and 8,000,000 or less) in which the constituent monosaccharide is an organic acid-modified heteropolysaccharide of glucose and galactose, guar gum, locust bean gum, and derivatives thereof, hydroxyethyl cellulose, alginic acid alkyl esters, glucomannan, and carbohydrates having gelling ability extracted from seaweed such as agar and carrageenan.

An aggregating agent may be blended in the ink composition according to the present invention, with which the pigment forms a gentle aggregate via the aggregating agent, and thus, direct aggregation of the pigments can be reduced, and the dispersion stability of the pigment is improved. In addition, an aggregating agent and the dispersant described above may be used in combination. When both an aggregating agent and the dispersant are used in combination, the dispersibility of the gentle aggregates formed via the aggregating agent can be improved, and the dispersion stability of the pigment in the ink can be further improved.

When the ink composition according to the present invention contains an aggregating agent, the content of the aggregating agent with respect to the total mass of the ink composition is not particularly limited, but is preferably in the range of 0.05 mass% or more and 1 mass% or less.

Examples of the aggregating agent include polyvinylpyrrolidone, polyethylene oxide, and water-soluble polysaccharides.

Examples of the water-soluble polysaccharide include tragacanth gum, guar gum, pullulan, cyclodextrin, and a water-soluble cellulose derivative.

Examples of the water-soluble cellulose derivative include carboxymethyl cellulose, methyl cellulose, hydroxyethyl cellulose, hydroxypropyl cellulose, hydroxyethyl methyl cellulose, and hydroxypropyl methyl cellulose.

A surfactant may be blended in the ink composition according to the present invention, with which the surface tension of the ink composition can be adjusted to an appropriate range.

Examples of the surfactant used for adjusting the surface tension include a nonionic surfactant, an anionic surfactant, a cationic surfactant, and an amphoteric surfactant, and any of them may be suitably used.

Examples of the surfactant used for adjusting the surface tension include a phosphate ester-based surfactant, a silicone-based surfactant, a surfactant having an acetylene bond in the structure, a fluorine-based surfactant, and these surfactants are appropriately selected according to the components of the ink composition, applications, and the like.

A surfactant used as a dispersant may be used as a surfactant used for both improvement of dispersibility of a pigment and adjustment of the surface tension.

When the ink composition according to the present invention contains a surfactant used for adjusting the surface tension, the content of the surfactant used for adjusting the surface tension with respect to the total mass of the ink composition is not particularly limited, but is preferably in the range of 0.01 mass% or more and 2 mass% or less, and more preferably 0.05 mass% or more and 1 mass% or less.

A pH adjusting agent may be blended in the ink composition according to the present invention, with which the pH of the ink composition can be adjusted to an appropriate range. As the pH adjusting agent, various acidic substances and basic substances may be used.

Examples of the acidic substance include hydrochloric acid, sulfuric acid, nitric acid, phosphoric acid, carbonic acid, boric acid, lactic acid, citric acid, tartaric acid, and malic acid.

Examples of the basic substance include ammonia, sodium carbonate, sodium hydrogen phosphate, potassium hydrogen phosphate, sodium hydroxide, potassium hydroxide, and sodium acetate, and alkanolamines such as monoethanolamine, diethanolamine, and triethanolamine may also be applied.

When the ink composition according to the present invention contains a pH adjusting agent, the content of the pH adjusting agent with respect to the total mass of the ink composition is not particularly limited, but is preferably 0.1 mass% or more and 5 mass% or less, and more preferably 0.5 mass% or more and 2 mass% or less.

When the solvent applied to the present invention is water, a water-soluble organic solvent compatible with water can be blended, and evaporation of moisture from the pen tip of the writing instrument can be reduced.

Examples of the water-soluble organic solvent include ethanol, propanol, butanol, glycerin, sorbitol, triethanolamine, diethanolamine, monoethanolamine, ethylene glycol, diethylene glycol, thioethylene glycol, polyethylene glycol, propylene glycol, butylene glycol, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monobutyl ether, ethylene glycol monomethyl ether acetate, sulfolane, 2-pyrrolidone, and N-methyl-2-pyrrolidone.

The water-soluble organic solvent may be used singly or in combination of two or more thereof.

When the ink composition according to the present invention contains a water-soluble organic solvent, the content of the water-soluble organic solvent with respect to the total mass of the ink composition is not particularly limited, but is preferably 1 mass% or more and 40 mass% or less, more preferably 5 mass% or more and 30 mass% or less, and still more preferably 10 mass% or more and 25 mass% or less. When the content of the water-soluble organic solvent exceeds 40 mass%, the ink viscosity is likely to increase, the ink discharging properties of the writing instrument containing the ink composition decrease, and writing defects such as faint parts and line skipping are likely to occur. When the content is less than 1 mass%, the effect of reducing moisture evaporation is poor.

The ink composition according to the present invention may contain, for example, a water-soluble resin such as an alkyd resin, an acrylic resin, a styrene-maleic acid copolymer, a cellulose derivative, polyvinylpyrrolidone, polyvinyl alcohol, dextrin, or the like, with which fixability to the paper surface and viscosity can be imparted.

The water-soluble resin may be used singly or in combination of two or more thereof.

When the ink composition according to the present invention contains a water-soluble resin, the content of the water-soluble resin with respect to the total mass of the ink composition is not particularly limited, but is preferably 1 mass% or more and 30 mass% or less, and more preferably 1 mass% or more and 10 mass% or less.

In the ink composition according to the present invention, various additives may be blended as necessary.

Examples of the additive include an antirust agent, an antiseptic agent or an antifungal agent, a bubble absorber, a wetting agent, an antifoaming agent, and a specific gravity regulator.

Examples of the antirust agent include dicyclohexylammonium nitrite, diisopropylammonium nitrite, and saponin.

Examples of the antiseptic agent or antifungal agent include carbolic acid, a sodium salt of 1,2-benzothiazoline-3-one, sodium benzoate, sodium dehydroacetate, potassium sorbate, propyl parahydroxybenzoate, and 2,3,5,6-tetrachloro-4-(methylsulfonyl)pyridine.

Examples of the bubble absorber include ascorbic acids, erythorbic acids, α-tocopherol, catechins, synthetic polyphenols, kojic acid, alkylhydroxylamines, oxime derivatives, α-glucosylrutin, α-lipoic acid, phosphonate, phosphinate, sulfite, sulfoxylate, dithionite, thiosulfate, and thiourea dioxide.

Examples of the wetting agent include reduced or non-reduced starch hydrolysates, disaccharides such as trehalose, oligosaccharides, sucrose, cyclodextrin, glucose, dextrin, sorbitol, mannitol, and sodium pyrophosphate.

When the ink composition according to the present invention is stored in a writing instrument (ballpoint pen) equipped with a ballpoint pen tip, a lubricant may also be blended in the ink composition.

The lubricant improves lubricity between a ball receiving seat provided inside a chip main body and a ball provided at the front end of the chip main body, can easily prevent wear of the ball receiving seat, and can improve writing performance.

Examples of the lubricant include higher fatty acids such as oleic acid, nonionic surfactants having a long chain alkyl group, polyether-modified silicone oils, thiophosphorous acid triesters such as thiophosphorous acid tri(alkoxycarbonyl methyl ester) and thiophosphorous acid tri(alkoxycarbonyl ethyl ester), and phosphoric acid ester-based surfactants such as phosphoric acid monoesters of polyoxyethylene alkyl ethers or polyoxyethylene alkyl aryl ethers, phosphoric acid diesters of polyoxyethylene alkyl ethers or polyoxyethylene alkyl aryl ethers, and metal salts, ammonium salts, amine salts, and alkanolamine salts thereof.

When the ink composition according to the present invention is applied to a ballpoint pen equipped with a ballpoint pen tip including a tip main body provided with a metal ball receiving seat and a metal ball, a phosphate ester-based surfactant is preferably used as the lubricant.

The phosphate ester-based surfactant has a property that a phosphate group is easily adsorbed to metals. For this reason, when the ink composition containing a phosphate ester-based surfactant is applied to the ballpoint pen, the phosphate ester-based surfactant is adsorbed on the ball and the ball receiving seat to form a lubricating layer composed of the phosphate ester-based surfactant on the ball surface and the ball receiving seat surface, and thus, lubricity between the ball and the ball receiving seat can be improved to smoothly rotate the ball. Then, wear of the ball receiving seat is reduced, and a writing performance such as a writing feeling can be improved.

A method for producing the ink composition according to the present invention is not particularly limited, and any conventionally known method may be used.

Specifically, the ink composition may be produced by stirring a mixture containing the above components with various stirrers such as propeller stirring, homodisper, or homomixer, or by dispersing the mixture with various dispersers such as bead mill.

In the ink composition according to the present invention, viscosity characteristics are not particularly limited. For example, an ink composition having viscosity characteristics, such as an ink composition having high shear thinning (gel ink), an ink composition having low viscosity and low shear thinning, and an ink composition having low viscosity and non-shear thinning (Newtonian ink) may be used. The uric acid pigment applied to the present invention is excellent in dispersion stability, and even when the ink composition has a low viscosity, the pigment hardly settles, and thus, an ink composition having a low viscosity is suitably used.

When the ink composition according to the present invention is used for a ballpoint pen, the viscosity is preferably in the following range as measured under the condition of a rotation speed of 1 rpm (shear rate of 3.84 sec⁻¹) in an environment of 20°C because the dispersion stability of the pigment can be further stabilized. Specifically, the viscosity of the ink composition in this case is preferably 1 mPa·s or more and 2000 mPa·s or less, more preferably 10 mPa·s or more and 1500 mPa·s or less, and still more preferably 100 mPa·s or more and 1000 mPa·s or less.

In addition, the viscosity is preferably in the following range as measured under the condition of a rotation speed of 100 rpm (shear rate of 384 sec⁻¹) in an environment of 20°C because the ink discharge properties from the pen tip of the ballpoint pen can be improved. Specifically, the viscosity of the ink composition in this case is preferably 1 mPa·s or more and 200 mPa·s or less, more preferably 10 mPa·s or more and 100 mPa·s or less, and still more preferably 20 mPa·s or more and 50 mPa·s or less.

When the viscosity of the ink composition is within the above range, the dispersion stability of the pigment and the easy fluidity of the ink in the mechanism of the ballpoint pen can be maintained at a high level.

The viscosity of the ink composition is a value measured using a rheometer [manufactured by TA Instruments, product name: Discovery HR-2, cone plate (diameter 40 mm, Angle 1°)] under the condition of a rotation speed of 1 rpm (shear rate of 3.84 sec⁻¹) or a rotation speed of 100 rpm (shear rate of 384 sec⁻¹) with the ink placed in an environment of 20°C.

When the ink composition according to the present invention is used in a marking pen, the viscosity thereof is preferably in the following range as measured under an environment of 20°C and under a condition of a rotation speed of 50 rpm because the fluidity of the ink and the dispersion stability of the pigment can be maintained at a high level. Specifically, the viscosity of the ink composition in this case is preferably 1 mPa·s or more and 30 mPa·s or less, more preferably 1 mPa·s or more and 20 mPa·s or less, and still more preferably 1 mPa·s or more and 10 mPa·s or less.

The viscosity of the ink composition is a value measured by placing the ink composition under an environment of 20°C using an E-type rotational viscometer [manufactured by Toki Sangyo Co., Ltd., product name: RE-85 L, cone-type rotor: standard type (1°34' × R24)].

When the ink composition according to the present invention is used for a ballpoint pen or a marking pen, the pH thereof is preferably in the range of 6 or more and 10 or less, and more preferably 7 or more and 9 or less. When the pH is within the above range, an increase in excessive viscosity and a deterioration of the ink composition can be reduced.

The pH of the ink composition is a value measured by placing the ink under an environment of 20°C using a pH meter [manufactured by DKK-TOA CORPORATION, product name: IM-40S].

When the ink composition according to the present invention is used for a ballpoint pen, the structure and shape of the ballpoint pen itself are not particularly limited, and for example, a ballpoint pen refill or a ballpoint pen including a ballpoint pen tip and an ink filling mechanism is filled with the ink composition.

The ballpoint pen tip includes a tip main body and a ball provided at the front end of the tip main body. Examples of the ballpoint pen tip include a tip obtained by holding a ball in a ball holding part obtained by pressing and deforming the vicinity of a tip of a tip main body made of a metal pipe inward from an outer surface, a tip obtained by holding a ball in a ball holding part formed by cutting a tip main body made of a metal material by a drill or the like, a tip provided with a ball receiving seat made of resin inside a metal or plastic tip main body, and a tip obtained by biasing a ball held in the tip forward by a spring body.

The material of the chip main body and the ball is not particularly limited, and examples thereof include cemented carbide, stainless steel, ruby, ceramic, resin, and rubber. Further, the ball may be subjected to a surface treatment such as DLC coating.

The diameter of the ball is typically 0.2 mm or more and 3 mm or less, preferably 0.2 mm or more and 2 mm or less, more preferably 0.2 mm or more and 1.5 mm or less, and still more preferably 0.2 mm or more and 1 mm or less.

Examples of the ink filling mechanism include an ink container that can be directly filled with ink.

As the ink container, for example, a molded body made of a thermoplastic resin such as polyethylene, polypropylene, polyethylene terephthalate, or nylon, or a metal tubular body is used.

A ballpoint pen refill (hereinafter, sometimes referred to as "refill") may be formed by directly connecting a ballpoint pen tip to the ink container or via a connecting member and directly filling the ink container with the ink. A ballpoint pen may be formed by containing the refill in a barrel.

The back end of the ink filled in the ink container is filled with an ink backflow inhibitor. Examples of the ink backflow inhibitor include a liquid plug or a solid plug.

The liquid plug is made of a nonvolatile liquid and/or a hardly volatile liquid, and examples thereof include petrolatum, spindle oil, castor oil, olive oil, refined mineral oil, liquid paraffin, polybutene, α-olefin, oligomer or cooligomer of α-olefin, dimethyl silicone oil, methyl phenyl silicone oil, amino-modified silicone oil, polyether-modified silicone oil, and fatty acid-modified silicone oil.

The nonvolatile liquid and/or the hardly volatile liquid may be used singly or in combination of two or more thereof.

It is preferable to add a thickener to the nonvolatile liquid and/or the hardly volatile liquid to thicken the viscosity to a suitable viscosity.

Examples of the thickener include silica whose surface is hydrophobically treated, fine particle silica whose surface is methylated, aluminum silicate, swellable mica, clay-based thickeners such as hydrophobically treated bentonite and montmorillonite, fatty acid metal soaps such as magnesium stearate, calcium stearate, aluminum stearate, and zinc stearate, dextrin-based compounds such as tribenzylidene sorbitol, fatty acid amide, amide-modified polyethylene wax, hydrogenated castor oil, and fatty acid dextrin, and cellulose-based compounds.

Examples of the solid plug include solid plugs made of polyethylene, polypropylene, and polymethylpentene.

As the ink backflow inhibitor, the liquid plug and the solid plug described above may be used in combination.

In addition, a ballpoint pen including a ballpoint pen tip and an ink filling mechanism may be formed by using the barrel itself as an ink filling mechanism, directly filling the barrel with ink, and attaching a ballpoint pen tip to the front end of the barrel.

When the ink to be filled in the ink filling mechanism has a low viscosity, the ballpoint pen including the ballpoint pen tip and the ink filling mechanism may further include an ink supplying mechanism for supplying the ink to be filled in the ink filling mechanism to the pen tip.

The ink supply mechanism is not particularly limited, and examples thereof include (1) a mechanism in which an ink guide core formed of fiber bundles or the like is provided as an ink flow rate regulator and the ink is supplied to a pen tip through the ink guide core, (2) a mechanism in which a comb-groove-shaped ink flow regulator is provided and the ink is supplied to the pen tip through the ink flow regulator, and (3) a mechanism in which a large number of disk bodies are disposed in parallel at intervals in a comb groove shape, a slit-shaped ink guide groove penetrating the disk body in the axial direction and a ventilation groove having a larger width than the groove are provided, and the ink is supplied to the pen tip through the pen core in which an ink guide core for guiding the ink from the ink filling mechanism to the pen tip is disposed at an axial center.

The material of the pen core is not particularly limited as long as it is a synthetic resin capable of injection-molding a large number of disk bodies into a comb groove-shaped structure. Examples of the synthetic resin include general-purpose polycarbonate, polypropylene, polyethylene, and an acrylonitrile-butadiene-styrene copolymer resin (ABS resin). In particular, an acrylonitrile-butadiene-styrene copolymer resin (ABS resin) is suitably used because it has high moldability and easily obtains pen core performance.

When the ballpoint pen includes the ink supply mechanism, an ink occlusion body that can be filled with ink may be used as the ink filling mechanism in addition to the ink container and the barrel described above.

The ink occlusion body is a fiber bundle body in which crimped fibers are bundled in the longitudinal direction, and is configured by incorporating the crimped fibers in a covering body such as a plastic cylinder or a film and adjusting the porosity so as to be in a range of about 40% or more and 90% or less.

In addition, a ballpoint pen refill including a ballpoint pen tip, an ink filling mechanism, and an ink supply mechanism may be formed by containing an ink occlusion body impregnated with ink in an ink container, providing an ink supply mechanism at a front end of the ink container so as to be connected to the ink occlusion body, and connecting a ballpoint pen tip to the ink supply mechanism directly or via a connection member so as to be connected to the ink supply mechanism. Alternatively, a ballpoint pen refill may also be formed by containing an ink occlusion body impregnated with ink in an ink container, providing an ink supply mechanism inside the ink container so as to be connected to the ink occlusion body, and connecting the ballpoint pen tip to the ink container directly or via a connection member so as to be connected to the ink supply mechanism.

Specific examples of the configuration of the ballpoint pen containing the ink composition according to the present invention include: (1) a ballpoint pen including an ink container filled with ink in a barrel, in which a ballpoint pen tip is connected to the ink container directly or via a connecting member, and an ink backflow inhibitor is filled at an end surface of the ink; (2) a ballpoint pen including a mechanism in which a barrel is directly filled with ink and the ink is supplied to a pen tip by interposing a comb-shaped ink flow rate regulator or an ink guide core composed of a fiber bundle or the like interposed as an ink flow rate regulator; (3) a ballpoint pen including a mechanism in which a barrel is directly filled with ink and the ink is supplied to a pen tip via the pen core described above; and (4) a ballpoint pen including an ink occlusion body impregnated with ink in a barrel, in which a mechanism for supplying the ink to a pen tip by interposing an ink guide core composed of a fiber bundle or the like as an ink flow rate regulator is provided.

When the ink composition according to the present invention is used for a marking pen, the structure and shape of the marking pen itself are not particularly limited, and for example, a marking pen refill or a marking pen including a marking pen tip and an ink filling mechanism is filled with the ink composition.

As the marking pen tip, for example, a general-purpose porous member having communicating pores selected from a range of around 30% or more and 70% or less in porosity, such as a fiber resin processed product, a hotmelt fiber fusion processed product, and a felt product, or an extruded product of a synthetic resin having a plurality of ink lead-out holes extending in the axial direction can be exemplified, and one end thereof is processed into a shape according to a purpose such as a round shape, a rectangular shape, and a chisel shape and put to practical use.

Examples of the ink filling mechanism include an ink occlusion body that can be filled with ink.

The ink occlusion body is a fiber bundle body in which crimped fibers are bundled in the longitudinal direction, and is configured by incorporating the crimped fibers in a covering body such as a plastic cylinder or a film and adjusting the porosity to be in a range of about 40% or more and 90% or less.

A marking pen may be formed by containing the ink occlusion body impregnated with ink in a barrel and connecting the marking pen tip to the barrel directly or via a connecting member so as to be connected to the ink occlusion body.

In addition, a marking pen refill (hereinafter, sometimes referred to as "refill") may be formed by containing an ink occlusion body impregnated with ink in an ink container and connecting a marking pen tip to the ink container directly or via a connecting member so as to be connected to the ink occlusion body. A marking pen may be formed by containing the refill in a barrel.

As the ink container, for example, a molded body made of a thermoplastic resin such as polyethylene, polypropylene, polyethylene terephthalate, or nylon, or a metal tubular body is used.

The marking pen including the marking pen tip and the ink filling mechanism may further include an ink supplying mechanism for supplying the ink composition to be filled in the ink filling mechanism to the pen tip.

The ink supply mechanism is not particularly limited, and examples thereof include (1) a mechanism in which an ink guide core formed of fiber bundles or the like is provided as an ink flow rate regulator and the ink is supplied to a pen tip through the ink guide core, (2) a mechanism in which a comb-groove-shaped ink flow regulator is provided and the ink is supplied to the pen tip through the ink flow regulator, (3) a mechanism in which a large number of disk bodies are disposed in parallel at intervals in a comb groove shape, a slit-shaped ink guide groove penetrating the disk body in the axial direction and a ventilation groove having a larger width than the groove are provided, and the ink is supplied to the pen tip through the pen core in which an ink guide core for guiding the ink from the ink filling mechanism to the pen tip is disposed at an axial center, and (4) a mechanism including an ink flow rate regulator with a valve opening mechanism and supplying ink to the pen tip.

The material of the pen core is not particularly limited as long as it is a synthetic resin capable of injection-molding a large number of disk bodies into a comb groove-shaped structure. Examples of the synthetic resin include general-purpose polycarbonate, polypropylene, polyethylene, and an acrylonitrile-butadiene-styrene copolymer resin (ABS resin). In particular, an acrylonitrile-butadiene-styrene copolymer resin (ABS resin) is suitably used because it has high moldability and easily obtains pen core performance.

As the valve mechanism, a general-purpose pumping type valve mechanism that is opened by pressing a tip may be used, and a valve mechanism that is set to a spring pressure that can be pressed and opened by pen pressure is preferable.

When the marking pen includes the ink supply mechanism, an ink container that can be directly filled with ink may be used as the ink filling mechanism in addition to the above-described ink occlusion body. Alternatively, the barrel itself may be used as an ink filling mechanism to directly fill the barrel with the ink.

In addition, a marking pen refill including a marking pen tip, an ink filling mechanism, and an ink supply mechanism may be formed by containing an ink occlusion body impregnated with ink in an ink container, providing an ink supply mechanism at a front end of the ink container so as to be connected to the ink occlusion body, and connecting a marking pen tip to the ink supply mechanism directly or via a connection member so as to be connected to the ink supply mechanism. Alternatively, a marking pen refill may also be formed by containing an ink occlusion body impregnated with ink in an ink container, providing an ink supply mechanism inside the ink container so as to be connected to the ink occlusion body, and connecting the marking pen tip to the ink container directly or via a connection member so as to be connected to the ink supply mechanism.

Specific examples of the configuration of the marking pen containing the ink composition according to the present invention include (1) a marking pen in which an ink occlusion body composed of a fiber bundle impregnated with ink is contained in a barrel, and a marking pen tip composed of a fiber processed body or a resin molded body in which a capillary gap is formed is connected to the barrel directly or via a connecting member such that the ink occlusion body and the tip are connected to each other, (2) a marking pen in which a barrel is directly filled with ink, and a mechanism for supplying ink to a pen tip by interposing an ink guide core composed of a comb-groove-shaped ink flow rate regulator, a fiber bundle or the like as an ink flow rate regulator is provided, (3) a marking pen in which a barrel is directly filled with ink, and a mechanism for supplying ink to a pen tip via the above-described pen core is provided, (4) a marking pen including a tip and an ink container via a valve mechanism that opens a valve by pressing the tip, the ink container being directly filled with the ink, and (5) a marking pen including an ink container in which an ink occlusion body formed of a fiber bundle impregnated with ink is contained in a barrel, in which a marking pen tip formed of a fiber processed body or a resin molded body in which a capillary gap is formed is connected to the ink container directly or via a connecting member such that the ink occlusion body and the tip are connected.

When the ballpoint pen or the marking pen is directly filled with ink for a writing instrument, in order to facilitate redispersion of the pigment, a stirring body such as a stirring ball for stirring the ink may be incorporated in the ink container or the barrel to be filled with the ink. Examples of the shape of the stirring body include a spherical body and a rod body. The material of the stirring body is not particularly limited, and examples thereof include metal, ceramic, resin, and glass.

Further, the writing instrument such as a ballpoint pen or a marking pen described above may have an ink cartridge form as a detachable structure. In this case, after the ink contained in the ink cartridge of the writing instrument is used up, the ink cartridge can be replaced with a new ink cartridge for use.

As the ink cartridge, an ink cartridge that also serves as a barrel constituting the writing instrument by being connected to a writing instrument main body, or an ink cartridge that covers and protects the barrel (rear shaft) after being connected to the writing instrument main body is used. In the latter case, the ink cartridge may be used alone, or the writing instrument before use may have a structure in which the writing instrument body and the ink cartridge are connected, or a structure in which the ink cartridge is contained in the barrel in a non-connected state so that a user of the writing instrument starts use by connecting the ink cartridge in the barrel at the time of use.

Further, the writing instrument having the above configuration is provided with a cap attached to cover a pen tip (writing tip part) to form a cap-type writing instrument, with which it is possible to prevent the pen tip from being dried and becoming unable to perform writing and to prevent the writing tip part from being contaminated or damaged.

In addition, the ballpoint pen or the marking pen in which a refill is contained in a barrel may be formed into a retractable writing instrument by providing a retractable mechanism in the barrel, the retractable mechanism enabling the writing tip part to be retracted from the barrel, with which the writing tip part can be prevented from being contaminated or damaged.

The retractable writing instrument may be used as long as the writing tip part is contained in the barrel in a state where the writing tip part is exposed to the outside air, and the writing tip part protrudes from the barrel opening by the operation of the retractable mechanism.

As the retractable mechanism, for example, (1) a side slide type retractable mechanism in which an operation part (clip) movable in a front-rear direction from a rear side wall of a barrel is protruded outward in a radial direction, and a writing tip part is retracted from a barrel front end opening by sliding the operation part forward, (2) a rear end knock type retractable mechanism in which a writing tip part is retracted from a barrel front end opening by pressing an operation part provided at the rear end of the barrel forward, (3) a side knock type retractable mechanism in which the writing tip part is retracted from a barrel front end opening by pressing an operation part protruding from the outer surface of the barrel side wall inward in the radial direction, and (4) a rotary type retractable mechanism in which a writing tip part is retracted from a barrel front end opening by rotating an operation part by rotating a barrel are exemplified.

Further, the form of the ballpoint pen and the marking pen is not limited to the above configuration, and may be a composite writing instrument (a double-headed writing instrument, a pen tip retractable writing instrument, or the like) in which tips of different forms are mounted, tips for deriving inks of different color tones are mounted, or tips of different forms are mounted and color tones of inks derived from the respective tips are different from each other.

In addition, it is also possible to provide a composite type retractable writing instrument in which a plurality of refills are contained in a barrel and the writing tip part of any of the refills is caused to protrude and retract from a barrel opening by the operation of the retractable mechanism.

When a reversibly thermochromic composition, a reversibly thermochromic microcapsule pigment, a reversibly thermochromic resin particle, or the like is used as the colorant, the handwriting formed on the writing surface using the writing instrument containing the ink for a writing instrument according to the present invention can change its color by rubbing with a finger or by a heating tool or a cooling tool.

Examples of the heating tool include an electric heating and color-changing tool equipped with a resistance heating element such as a PTC device, a heat color-changing tool filled with a medium such as hot water, a heating and color-changing tool using steam, laser light, or the like, and application of a hair dryer. A friction member and a friction body are preferable because color change can be achieved by a simple method.

Examples of the cooling tool include application of an electric cooling and color-changing tool using a Peltier device, a cooling and color-changing tool filled with a refrigerant such as cold water or an ice piece, a storage cooling agent, a refrigerator, or a freezer.

As the friction member and the friction body, an elastic body such as an elastomer, a plastic foam, or the like, which is rich in elastic feeling and can generate appropriate friction at the time of rubbing to generate frictional heat, is preferable, but a plastic molded body, a stone, wood, metal, fabric, or the like may also be used.

A common eraser used for erasing a handwriting with a pencil may be used to scrape the handwriting, but with the eraser, eraser dust is generated during the scrubbing. Thus, the friction member and the friction body from which eraser dust is hardly generated are suitably used.

Examples of the material of the friction member and the friction body include silicone resin and SEBS resin (styrene-ethylene-butadiene-styrene block copolymer). With silicon resin, the resin easily adheres to the part erased by rubbing, and the handwriting tends to be repelled when writing is repeated. Thus, SEBS resin is more suitably used.

The friction member or the friction body may be a member having any shape separated from the writing instrument, but it is possible to achieve excellent portability by providing the friction member or the friction body in the writing instrument. A writing instrument set may also be obtained by combining the writing instrument with a friction member or a friction body having any shape separated from the writing instrument.

When the writing instrument is a cap-type writing instrument, a place where the friction member or the friction body is provided is not particularly limited. For example, the cap itself may be formed of a friction member, the barrel itself may be formed of a friction member, or when a clip is provided, the clip itself may be formed of a friction member, or the friction member or the friction body may be provided at a cap tip part (top part), a barrel rear end part (part not provided with a writing tip part), or the like.

When the writing instrument is a retractable writing instrument, a place where the friction member or the friction body is provided is not particularly limited. For example, when a barrel itself is formed of a friction member, or a clip is further provided, the clip itself may be formed of the friction member, or the friction member or the friction body may be provided in the vicinity of a barrel opening, a barrel rear end (a part not provided with a writing front end), or a knock part.

### [Examples]

Examples are shown below, but the present invention is not limited to these Examples. Unless otherwise specified, "parts" in Examples indicates "parts by mass".

### Example 1

### Preparation of Pigment Dispersion

Uric acid in an amount of 10 parts, 1 part of a dispersant [manufactured by BYK Japan KK., product name: DISPERBYK-191], and 89 parts of water were mixed. Then, 100 parts of glass beads having a diameter of 2.0 mm as a medium were added, and the mixture was pulverized and dispersed for 12 hours with a bead mill to prepare a pigment dispersion (uric acid pigment dispersion). The average particle size of the uric acid pigment dispersed in the pigment dispersion was 0.3 µm.

### Comparative Example 1

### Preparation of Pigment Dispersion

Titanium oxide in an amount of 10 parts [manufactured by Tayca Corporation, product name: JR-301], 1 part of a dispersant [manufactured by BYK Japan KK., product name: DISPERBYK-191], and 89 parts of water were mixed. Then, 100 parts of glass beads having a diameter of 2.0 mm as a medium were added, and the mixture was pulverized and dispersed for 12 hours with a bead mill to prepare a pigment dispersion (titanium oxide pigment dispersion). The average particle size of the titanium oxide pigment dispersed in the pigment dispersion was 0.3 µm.

### Evaluation of Dispersion Stability

Each pigment dispersion of Example 1 and Comparative Example 1 in an amount of 40 g was put in a screw tube bottle (No. 7), and allowed to stand still in an environment of room temperature (25°C) for 1 day. After a lapse of one day, each pigment dispersion was visually checked, and the dispersion stability was evaluated according to the following criteria. The evaluation results are shown in Table 1 below.
A: The pigment maintained its dispersed state, and the pigment dispersion was uniformly white.
B: A large amount of the pigment settled, the supernatant (aqueous layer) was visually recognized in the pigment dispersion, and they formed two separated layers.

### Evaluation of Redispersibility

Each pigment dispersion of Example 1 and Comparative Example 1 was placed in a sealed glass test tube having a diameter of 15 mm, and allowed to stand still in an environment of room temperature (25°C) for 7 days. After a lapse of 7 days, each glass test tube was shaken up and down, the redispersion state of each pigment dispersion was visually checked, and the redispersibility was evaluated according to the following criteria. The evaluation results are shown in Table 1 below.
A: The pigment was easily redispersed by shaking.
B: The pigment was not redispersed by shaking.

**Table 1**

| | | Example 1 | Comparative Example 1 |
|---|---|---|---|
| Evaluation | Dispersion stability | A | B |
| | Redispersibility | A | B |

### Example 2

### Preparation of Pigment Dispersion

Uric acid in an amount of 10 parts, 1 part of a surfactant [manufactured by AOKI OIL INDUSTRIAL Co., Ltd., product name: BLAUNON L-205] as a dispersant, and 89 parts of water were mixed. Then, 200 parts of zirconia beads having a diameter of 1.0 mm as a medium were added, and the mixture was pulverized and dispersed with a bead mill for 1 hour to prepare a pigment dispersion (uric acid pigment dispersion).

### Evaluation of Dispersion Stability

The pigment dispersion of Example 2 was checked with an optical microscope [manufactured by Olympus Corporation, product name: System biological microscope BX53, hundredfold], and the dispersion stability was evaluated according to the following criteria. The evaluation results are shown in Table 2 below.

A: A state in which the pigment was uniformly dispersed was visually recognized.
B: A state in which the primary particles of the pigment were aggregated was slightly visually recognized.
C: A state in which the pigment was remarkably aggregated was visually recognized.

### Evaluation of Redispersibility

The pigment dispersion of Example 2 was placed in a sealed glass test tube having a diameter of 15 mm, and allowed to stand still in an environment of room temperature (25°C) for 7 days. After a lapse of 7 days, the glass test tube was shaken up and down, the redispersion state of the pigment dispersion was visually checked, and the redispersibility was evaluated according to the following criteria. The evaluation results are shown in Table 2 below.

A: The pigment was easily redispersed by shaking.
B: The pigment was not redispersed by shaking.

### Examples 3 to 12

A pigment dispersion was prepared in the same manner as in Example 2 except that surfactants shown in Table 2 were used as a dispersant instead of the surfactant used in Example 2. The dispersion stability and redispersibility of the pigment dispersions of Examples 3 to 12 were evaluated in the same manner as in Example 2. The evaluation results are shown in Table 2 below.

**Table 2**

| | Dispersant (surfactant) | | Dispersant 1% | |
|---|---|---|---|---|
| | Product name (manufacturer) | Composition | Pulverized and dispersed for 1 hour | |
| | | | Dispersion stability evaluation | Redispersibility evaluation |
| Example 2 | BLAUNON L-205 [AOKI OIL INDUSTRIAL Co., Ltd.] | Polyoxyethylene laurylamine (m + n = 5 in General Formula (1)) | B | A |
| Example 3 | BLAUNON S-207 [AOKI OIL INDUSTRIAL Co., Ltd.] | Polyoxyethylene stearylamine (m + n = 7 in General Formula (1)) | B | A |
| Example 4 | KAWASILK S [Kawaken Fine Chemicals Co., Ltd.] | Potassium lauroyl silk amino acid | B | A |
| Example 5 | SOIPON SLTA [Kawaken Fine Chemicals Co., Ltd.] | Triethanolamine-lauroylsarcosinate | B | A |
| Example 6 | ALANON ALTA [Kawaken Fine Chemicals Co., Ltd.] | Triethanolamine-lauroyl methylaminopropionate | B | A |
| Example 7 | SOFTAZOLINE LAO [Kawaken Fine Chemicals Co., Ltd.] | Lauramidopropylamine oxide | B | A |
| Example 8 | Sarcosinate CN-30 [Nikko Chemicals Co., Ltd.] | Sodium cocoyl sarcosinate | B | A |
| Example 9 | ACETYLENOL E60 [Kawaken Fine Chemicals Co., Ltd.] | Polyoxyethylene acetylene glycol | B | A |
| Example 10 | NIKKOL BPS-10 [Nikko Chemicals Co., Ltd.] | PEG(10)phytosterol | B | A |
| Example 11 | NIKKOL BPS-20 [Nikko Chemicals Co., Ltd.] | PEG(20)phytosterol | B | A |
| Example 12 | DISPARLON AQ-360 [Kusumoto Chemicals, Ltd.] | Amine salt of anionic surfactant | B | A |

### Example 13

### Preparation of Pigment Dispersion

Uric acid in an amount of 10 parts, 1 part of a polymer dispersant as a dispersant [manufactured by BYK Japan KK., product name: DISPERBYK-191], and 89 parts of water were mixed. Then, 200 parts of zirconia beads having a diameter of 1.0 mm as a medium were added, and the mixture was pulverized and dispersed with a bead mill for 1 hour to prepare a pigment dispersion (uric acid pigment dispersion, dispersant 1%, pulverized and dispersed for 1 hour). The average particle size of the uric acid pigment dispersed in the pigment dispersion was 0.34 µm.

In addition, a pigment dispersion (uric acid pigment dispersion, dispersant 1%, pulverized and dispersed for 6 hours) was prepared in the same manner as in Example 13 except that the duration of the pulverization and dispersion treatment was changed to 6 hours. The average particle size of the uric acid pigment dispersed in the pigment dispersion was 0.30 µm.

The dispersion stability and redispersibility of the pigment dispersions of Example 13 were evaluated in the same manner as in Example 2. The evaluation results are shown in Table 3 below.

### Examples 14 to 26

A pigment dispersion (uric acid pigment dispersion, dispersant 1%, pulverized and dispersed for 1 hour) was prepared in the same manner as in Example 13 except that the polymer dispersants shown in Tables 3 to 4 were used as a dispersant instead of the polymer dispersant as a dispersant used in Example 13.

### Examples 27 to 30

A pigment dispersion (uric acid pigment dispersion, dispersant 2%, pulverized and dispersed for 1 hour) was prepared by performing a 1 hour pulverization dispersion treatment in the same manner as in Example 13 except that the polymer dispersants shown in Table 5 were used as a dispersant instead of the polymer dispersant as a dispersant used in Example 13, the amount of the polymer dispersant as a dispersant was changed to 2 parts, and the amount of water was changed to 88 parts.

The dispersion stability and redispersibility of the pigment dispersions of Examples 13 to 30 were evaluated in the same manner as in Example 2. The evaluation results are shown in Tables 3 to 5 below.

**Table 3**

| | Dispersant (polymer dispersant) | | | | Dispersant 1% | |
|---|---|---|---|---|---|---|
| | Product name (manufacturer) | Composition | Physical property | | Pulverized and dispersed for 1 hour | |
| | | | Acid value | Amino value | Dispersion stability evaluation | Redispersibility evaluation |
| Example 13 | DISPERBYK-191 [BYK Japan KK.] | Copolymer containing pigment-affinic group | 30 | 20 | A | A |
| Example 14 | DISPARLON AQ-380 [Kusumoto Chemicals, Ltd.] | Acrylic polymer | 15 | 11 | A | A |
| Example 15 | ANTI TERA-250 [BYK Japan KK.] | Solution of alkylolammonium salt of high molecular weight acidic polymer | 46 | 41 | A | A |
| Example 16 | FLOWLEN G-700AMP [Kyoeisha Chemical Co., Ltd.] | 2-Amino-2-methyl-1-propanol salt of carboxy-group-containing modified polymer/water | 25 | 25 | B | A |
| Example 17 | DISPERBYK-2010 [BYK Japan KK.] | Solution of modified styrene-maleic acid copolymer | 20 | 20 | B | A |
| Example 18 | DISPERBYK-2013 [BYK Japan KK.] | Structure-controlled copolymer containing pigment-affinic group | 8 | 18 | B | A |

**Table 4**

| | Dispersant (polymer dispersant) | | | | Dispersant 1% | |
|---|---|---|---|---|---|---|
| | Product name (manufacturer) | Composition | Physical property | | Pulverized and dispersed for 1 hour | |
| | | | Acid value | Amino value | Dispersion stability evaluation | Redispersibility evaluation |
| Example 19 | DISPERBYK-184 [BYK Japan KK.] | Solution of high-molecular-weight block copolymer containing pigment-affinic group | - | 15 | A | A |
| Example 20 | DISPERBYK-2055 [BYK Japan KK.] | Copolymer containing pigment-affinic group | - | 40 | A | A |
| Example 21 | Hinoact NB [Kawaken Fine Chemicals Co., Ltd.] | Basic group containing comb-shaped polymer dispersant | - | 25 to 40 | A | A |
| Example 22 | Solsperse 20000 [Lubrizol Japan Ltd.] | Amino group containing polymer dispersant | - | 32.1 ± 2.8 | A | A |
| Example 23 | DISPERBYK-2060 [BYK Japan KK.] | Solution of copolymer containing pigment-affinic group | 5 | - | A | A |
| Example 24 | MEGAFACE F-477 [DIC CORPORATION] | Fluorine-containing group/hydrophilic group/lipophilic group containing oligomer | - | - | B | A |
| Example 25 | MEGAFACE F-553 [DIC CORPORATION] | Fluorine-containing group/hydrophilic group/lipophilic group containing oligomer | - | - | B | A |
| Example 26 | MEGAFACE F-554 [DIC CORPORATION] | Fluorine-containing group/lipophilic group containing oligomer | - | - | B | A |

**Table 5**

| | Dispersant (polymer dispersant) | | | | Dispersant 2% | |
|---|---|---|---|---|---|---|
| | Product name (manufacturer) | Composition | Physical property | | Pulverized and dispersed for 1 hour | |
| | | | Acid value | Amino value | Dispersion stability evaluation | Redispersibility evaluation |
| Example 27 | DISPERBYK-191 [BYK Japan KK.] | Copolymer containing pigment-affinic group | 30 | 20 | A | A |
| Example 28 | FLOWLEN G-700AMP [Kyoeisha Chemical Co., Ltd.] | 2-Amino-2-methyl-1-propanol salt of carboxy-group-containing - containing modified polymer/water | 25 | 25 | B | A |
| Example 29 | DISPERBYK-2010 [BYK Japan KK.] | Solution of modified styrene-maleic acid copolymer | 20 | 20 | B | A |
| Example 30 | Solsperse 20000 [Lubrizol Japan Ltd.] | Amino group containing polymer dispersant | - | 32.1 ± 2.8 | A | A |

### Example 31

### Preparation of Ink Composition

Uric acid in an amount of 25 parts, 2.5 part of a dispersant [manufactured by BYK Japan KK., product name: DISPERBYK-191], and 72.5 parts of water were mixed. Then, 100 parts of glass beads having a diameter of 2.0 mm as a medium were added, and the mixture was pulverized and dispersed for 12 hours with a bead mill to prepare a pigment dispersion (uric acid pigment dispersion). The average particle size of the uric acid pigment dispersed in the pigment dispersion was 0.3 µm.

Then, 88 parts of the pigment dispersion, 0.2 parts of a shear thinning agent (succinoglycan) [manufactured by Sansho Co., Ltd., product name: Reozan], 1 part of a phosphate ester-based surfactant [manufactured by DKS Co., Ltd., product name: PLYSURF AL], 1 part of a pH adjusting agent (triethanolamine), 0.1 parts of an antiseptic agent [manufactured by Lonza Japan Ltd., product name: Proxel XL-2(S)], and 9.7 parts of water were mixed to prepare an ink composition.

### Production of Ballpoint Pen

An ink container formed of a polypropylene pipe was filled with the ink composition by suction, and then the ink container was connected to a ballpoint pen tip holding a cemented carbide ball having a diameter of 0.5 mm at its tip through a resin holder. Next, a viscoelastic ink backflow inhibitor (liquid plug) containing polybutene as a main component was filled from a rear end of the ink container, and a tail plug was fitted to a rear part of the pipe, and degassing treatment was performed by centrifugation to obtain a ballpoint pen refill.

Next, the above refill was incorporated into a barrel to produce a ballpoint pen (retractable ballpoint pen).

The ballpoint pen described above is provided with a rear end knock type protruding and retracting structure in which the tip provided on the ballpoint pen refill is contained in the barrel in a state of being exposed to the outside air, and the tip protrudes from a front end opening of the barrel by pressing an operation unit provided at the rear end of the barrel forward.

When a handwriting was made on A4 size black paper [manufactured by Nagatoya-shoten Co., Ltd., product name: Color Paper A4 medium thickness (thickness: 0.09 mm, density: 80 g/m²)] under a room temperature (20°C) environment using the above ballpoint pen, there was no writing defect such as faint parts and line skipping, and a clear white handwriting was formed. In addition, this handwriting concealed the writing surface and was a good handwriting with high concealability.

### Example 32

### Preparation of Ink Composition

The pigment dispersion of Example 31 in an amount of 88 parts, 7 parts of an acrylic resin [manufactured by BASF Japan Ltd., product name: JONCRYL PDX-7600], 0.3 parts of an acetylene glycol-based surfactant [manufactured by Nissin Chemical Industry Co., Ltd., product name: Dinol 604], 0.2 parts of an antiseptic agent [manufactured by Lonza Japan Ltd., product name: Proxel XL-2(S)], and 4.5 parts of water were mixed to prepare an ink composition.

### Production of Marking Pen

An ink container including a resin-processed pen body (round type) of polyester fibers at a tip part and incorporating a metallic spherical stirring body was filled with the ink composition, the ink composition was impregnated into the pen body, and a cap was attached to produce a marking pen.

When a handwriting was made on A4 size black paper [manufactured by Nagatoya-shoten Co., Ltd., product name: Color Paper A4 medium thickness (thickness: 0.09 mm, density: 80 g/m²)] under a room temperature (20°C) environment using the above marking pen, there was no writing defect such as faint parts and line skipping, and a clear white handwriting was formed. In addition, this handwriting concealed the writing surface and was a good handwriting with high concealability.

### Example 33

The pigment dispersion of Example 31 in an amount of 80 parts, 2 parts of a red dye [manufactured by Hodogaya Chemical Co., Ltd., product name: Fuloxin], 1 part of a phosphoric acid ester-based surfactant [DKS Co., Ltd., product name: PLYSURF AL], 1.5 parts of a resin emulsion [manufactured by Dow Chemical Japan Co., Ltd., product name: PRIMAL ASE-60], 10 parts of diethylene glycol, 4 parts of glycerin, 1 part of a pH adjusting agent (triethanolamine), and 0.5 parts of carbolic acid were mixed to prepare an ink composition.

### Production of Ballpoint Pen

An ink container formed of a polypropylene pipe was filled with the ink composition by suction, and then the ink container was connected to a ballpoint pen tip holding a cemented carbide ball having a diameter of 0.7 mm at its tip through a resin holder. Next, a viscoelastic ink backflow inhibitor (liquid plug) containing polybutene as a main component was filled from a rear end of the ink container, and a tail plug was fitted to a rear part of the pipe, and degassing treatment was performed by centrifugation to obtain a ballpoint pen refill.

Next, the above refill was incorporated into a barrel, and a cap was attached to prepare a ballpoint pen (cap-type ballpoint pen).

When a handwriting was made on A4 size black paper [manufactured by Nagatoya-shoten Co., Ltd., product name: Color Paper A4 medium thickness (thickness: 0.09 mm, density: 80 g/m²)] under a room temperature (20°C) environment using the above ballpoint pen, there was no writing defect such as faint parts and line skipping, and a clear pastel-like red handwriting was formed. In addition, this handwriting concealed the writing surface and was a good handwriting with high concealability.

## Claims

1. A writing instrument ink composition comprising at least a pigment containing a uric acid pigment, and a solvent.

2. The writing instrument ink composition according to claim 1, further comprising a dispersant.

3. The writing instrument ink composition according to claim 2, wherein the dispersant includes a polymer dispersant.

4. The writing instrument ink composition according to any one of claims 1 to 3, wherein the uric acid pigment has an average particle size of 0.05 µm or more and 1 µm or less.

5. The writing instrument ink composition according to any one of claims 1 to 4, wherein a content of the uric acid pigment with respect to a total mass of the ink composition is 1 mass% or more and 50 mass% or less.

6. The writing instrument ink composition according to any one of claims 1 to 5, further comprising a colorant.

7. A writing instrument containing the writing instrument ink composition according to any one of claims 1 to 6.

## Patentansprüche

1. Schreibinstrument-Tintenzusammensetzung, die mindestens ein Pigment, das ein Harnsäurepigment enthält, und ein Lösungsmittel umfasst.

2. Schreibinstrument-Tintenzusammensetzung gemäß Anspruch 1, die ferner ein Dispergiermittel umfasst.

3. Schreibinstrument-Tintenzusammensetzung gemäß Anspruch 2, in der das Dispergiermittel ein Polymer-Dispergiermittel einschließt.

4. Schreibinstrument-Tintenzusammensetzung gemäß mindestens einem der Ansprüche 1 bis 3, in der das Harnsäurepigment eine mittlere Partikelgröße von 0,05 µm oder mehr und 1 µm oder weniger hat.

5. Schreibinstrument-Tintenzusammensetzung gemäß mindestens einem der Ansprüche 1 bis 4, in der ein Anteil des Harnsäurepigments, bezogen auf eine Gesamtmasse der Tintenzusammensetzung, 1 Masse-% oder mehr und 50 Masse-% oder weniger ist.

6. Schreibinstrument-Tintenzusammensetzung gemäß mindestens einem der Ansprüche 1 bis 5, die ferner ein Farbmittel umfasst.

7. Schreibinstrument, das die Schreibinstrumenten-Tintenzusammensetzung gemäß mindestens einem der Ansprüche 1 bis 6 enthält.

## Revendications

1. Composition d'encre pour instrument d'écriture comprenant au moins un pigment contenant un pigment d'acide urique, et un solvant.

2. Composition d'encre pour instrument d'écriture selon la revendication 1, comprenant en outre un dispersant.

3. Composition d'encre pour instrument d'écriture selon la revendication 2, dans laquelle le dispersant inclut un dispersant polymère.

4. Composition d'encre pour instrument d'écriture selon l'une quelconque des revendications 1 à 3, dans laquelle le pigment d'acide urique présente une taille de particule moyenne de 0,05 µm ou plus et 1 µm ou moins.

5. Composition d'encre pour instrument d'écriture selon l'une quelconque des revendications 1 à 4, dans laquelle une teneur du pigment d'acide urique par rapport à une masse totale de la composition d'encre est 1 % en masse ou plus et 50 % en masse ou moins.

6. Composition d'encre pour instrument d'écriture selon l'une quelconque des revendications 1 à 5, comprenant en outre un colorant.

7. Instrument d'écriture contenant la composition d'encre pour instrument d'écriture selon l'une quelconque des revendications 1 à 6.
